# FASCICULE DE BREVET EUROPEEN

(11) **EP 0 481 880 B1**
(45) Date de publication et mention de la délivrance du brevet: **27.01.1993**
(21) Numéro de dépôt: 91402756.0
(22) Date de dépôt: 15.10.1991
(51) Int. Cl.: G07C 9/00, G07F 7/00, H04M 11/04

(54) **Procédé de télésurveillance à gestion simplifiée**
Verfahren zur Fernüberwachung mit vereinfachter Verwaltung
Remote monitoring system with simplified management

(30) Priorité: 15.10.1990 FR 9012695
(43) Date de publication de la demande: 22.04.1992
(73) Titulaire: ASGARD, F-92400 Courbevoie (FR)
(72) Inventeur: Mongin, Marc, F-75116 Paris (FR); Schiltz, Patrick, F-75116 Paris (FR)
(74) Mandataire: Schmit, Christian Norbert Marie

(56) Documents cités:
- EP-A- 0 295 146
- EP-A- 0 314 871
- EP-A- 0 378 727
- WO-A-89/00320
- US-A- 4 361 730
- US-A- 4 465 904
- US-A- 4 656 319

## Description

La présente invention a pour objet un procédé de télésurveillance à gestion simplifiée. Elle trouve son application dans le domaine de la télésurveillance. Elle a pour but de simplifier la gestion des contrats de télésurveillance entre une société de télésurveillance et ses nombreux petits clients et donc d'ouvrir plus facilement de tels services à de nombreux autres clients. Bien entendu le procédé est également applicable aux gros clients.

Les procédés de télésurveillance consistent pour l'essentiel à placer, chez un client qui demande assistance, des capteurs de détection de mouvements ou d'intrusion et à relier ces capteurs à une centrale d'alarme. La centrale d'alarme est reliée à un transmetteur capable de composer automatiquement un numéro de téléphone et de se mettre en relation ainsi avec un centre de télésurveillance. Le centre de télésurveillance est animé par un opérateur rétribué par la société de télésurveillance. Dès qu'un individu, un voleur ou un espion, pénètre à l'intérieur d'un endroit surveillé par les capteurs, ceux-ci détectent son intrusion et envoient un message à la centrale d'alarme qui répercute automatiquement via le transmetteur cette alarme au centre de télésurveillance. Un opérateur du centre de télésurveillance soit se rend lui même immédiatement sur les lieux de l'événement, soit prévient la police.

Il existe différents types de contrat que peuvent souscrire les clients avec les prestataires de services qui dirigent ces sociétés de télésurveillance. En effet, selon qu'on est un particulier ou qu'au contraire on représente une entreprise, les risques encourus ne sont pas les mêmes. Par ailleurs, les particuliers peuvent avoir des désirs difficiles à gérer. Par exemple, un particulier pourra désirer faire surveiller sa maison de campagne seulement pendant les périodes où lui même n'y est pas, et ne pas faire surveiller (et donc ne pas payer de télésurveillance) pendant les périodes où lui même s'y trouve.

Ce type de besoin présente deux difficultés de gestion, d'une part il peut conduire, selon la fréquence plus ou moins élevés de ces recours intermittent à la société de télésurveillance, à des prestations de service dont le montant corrélativement est plus ou moins élevé. Quand il est peu élevé, le coût administratif de gestion des factures peut même être supérieur au service lui même. Ceci rend ce service peu attractif en terme de rentabilité. Par ailleurs, l'établissement de tel contrat nécessite au départ un climat de confiance entre le prestataire de service et son client. En effet, on peut supposer que le client va souscrire un contrat minimum, mais qu'il est susceptible d'utiliser les services de la société de télésurveillance au-delà de ce qu'il a réellement souscrit. Par exemple, il ne se rend plus à sa maison de campagne pendant une année et donc il utilise le service de télésurveillance pendant cette année, alors qu'il peut s'être engagé à y passer huit mois par an.

Bien que les traitements des alarmes soient automatiques, on comprend que les opérateurs des centres de télésurveillance peuvent être sollicités d'autant plus que le risque encouru est plus grand : que la durée de télésurveillance elle-même est plus grande. En conséquence, la rentabilité de la société de télésurveillance peut diminuer.

Pour résoudre ce problème de gestion et de coût, l'invention préconise l'utilisation d'une carte électronique, en particulier une carte à puce servant de moyen de prépaiement et dans laquelle sont mémorisées des informations représentant au moins une quantité prépayée correspondant au contrat souscrit. Cette carte électronique doit être insérée, chez le client, dans un lecteur qui décompte les unités prépayées au fur et à mesure de l'écoulement du temps d'une part, et de la mise en service effective de la télésurveillance d'autre part. Dans ces conditions, on limite la prestation de service à la quantité effectivement prépayée et souscrite par le client.

Ce mode de consommation de service peut cependant subir des aléas dû au fait que la consommation des unités est effectuée à distance par rapport à l'endroit où est exécuté la prestation de service. En effet, les opérateurs de la société de télésurveillance sont situés au centre de télésurveillance qui est éloigné du lecteur de carte à puce qui, lui, est chez le client. Selon des particularités du procédé de l'invention on montrera comment on évite les défauts ou les fraudes de fonctionnement que cette situation pourrait entraîner.

Un autre problème à résoudre avec l'invention vient du fait que les transmetteurs sont quasiment normalisés maintenant, et que l'adjonction du système de l'invention doit être compatible avec les transmetteurs déjà en place sans nécessiter une intervention technique chère. Dans l'invention, on résout ce problème en faisant passer une boucle de test propre au transmetteur au travers du lecteur de carte à puce et en ouvrant, ou en fermant, le circuit de cette boucle en fonction de l'état de la carte à puce dans le lecteur. Cette ouverture ou fermeture est même périodique.

Enfin il apparaît d'autres besoins qui entrent dans le cadre des services que peuvent rendre les sociétés de télésurveillance. Ces autres besoins concernent notamment les personnes âgées. Plus généralement, ces autres besoins concernent des alarmes techniques par opposition aux alarmes de vol, quine se produisent que lorsque les bénéficiaires du service sont absents. Dans le cas des personnes âgées, celles-ci sont munies de poires d'appel pendues autour de leur cou par une cordelette. En cas d'agression ou en cas de difficulté (notamment pour les cardiaques) ces personnes âgées appuient sur leur poire d'appel. Celle-ci émet un signal de danger reçu par un transmetteur, éventuellement par l'intermédiaire d'une centrale d'alarme. Ce signal est retransmis par le transmetteur vers la centrale de télésurveillance. Le problème à résoudre est donc d'établir des contrats alternatifs : les personnes âgées se mettant sous protection personnelle ou pendant leur absence faisant surveiller leur domicile. La carte à puce par sa programmation permet de gérer facilement cette alternative. En cas d'appel correspondant à un danger une réaction adéquate est entreprise par la société de télésurveillance.

L'invention a donc pour objet un procédé de télésurveillance tel que défini par la revendication 1 et un procédé de télégestion tel que défini par la revendication 13.

L'invention sera mieux comprise à la lecture de la description qui suit et à l'examen des figures qui l'accompagnent. Celles-ci ne sont données qu'à titre indicatif et nullement limitatif de l'invention. Les figures montrent :
- figure 1 : un dispositif utilisable pour mettre en oeuvre le procédé de l'invention ;
- figure 2 : les étapes du procédé de l'invention.

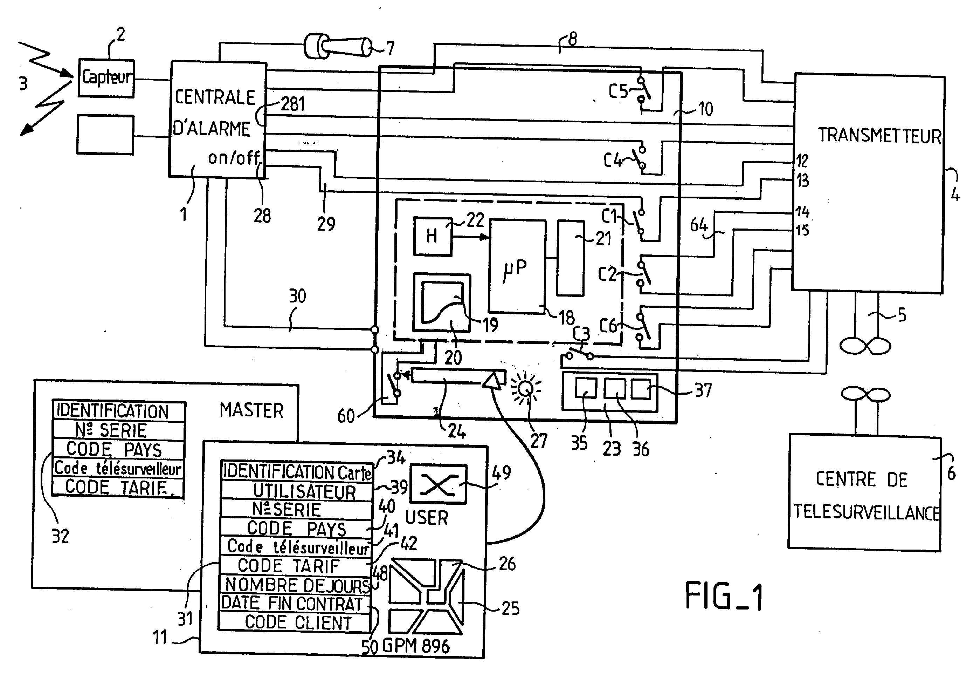

La figure 1 montre un dispositif utilisable pour mettre en oeuvre le procédé de l'invention. Elle montre une centrale d'alarme 1 reliée à un ensemble de capteurs tel que 2 censés surveiller un espace sensible 3 pour un client. Les capteurs tel que 2 peuvent être des capteurs de type radar, à effet Doppler ou non, ou même des caméras associées à des procédés de traitement d'images pour mesurer la variation dans l'image saisie. Ils peuvent aussi être des détecteurs d'un phénomène physique quelconque : chaleur, humidité, dépression. Quand il s'agit de protection physique, ces capteurs sont les poires d'appel mentionnées ci-dessus. Ces capteurs sont pour l'essentiel des automates, qui émettent un signal lorsqu'ils sont sollicités. Les poires d'appel comportant des émetteurs radioélectriques, les centrales d'alarme, ou les relais jouant ce rôle comportent alors des récepteurs radioélectriques. La centrale d'alarme est reliée à un transmetteur 4. Le transmetteur 4 est en relation, par une ligne de type téléphonique 5, avec un centre de télésurveillance 6 appartenant au prestataire de service : à la société de télésurveillance.

Le principe de fonctionnement d'une installation de ce type est connu. Lorsqu'un phénomène est détecté par les capteurs, un message est envoyé par le transmetteur au centre de télésurveillance en même temps qu'une alarme peut être orientée vers une sirène 7 ou tout autre moyen de signalisation sur place. Le message envoyée par la centrale d'alarme transite, physiquement, par une ligne de transmission 8 entre la centrale 1 et le transmetteur 4. Ce message peut consister en un code d'alarme ou même, dans le cas où il s'agit de signaux de télévision détectés par une caméra, être le signal vidéo de l'image lui même.

Le fonctionnement du transmetteur, de type connu, consiste d'une part à envoyer les signaux d'alarme lorsque quelque chose d'anormal se produit, et d'autre part à envoyer des signaux périodiques, par exemple une fois par jour, pour signaler le bon état de la ligne de transmission passant par le transmetteur. D'une manière connue, le transmetteur comporte des moyens pour composer un indicatif téléphonique et pour se mettre en relation avec le centre de télésurveillance. Ces moyens de composition utilisent soit une ligne téléphonique spécialisée et réservée au transmetteur, soit une ligne utilisée par ailleurs à d'autres fins par le client. Dans ce cas, l'émission sur la ligne par le transmetteur de ses signaux est prioritaire : les autres communications sont alors coupées. En général, l'émission périodique de vérification de l'état d'un transmetteur est effectué la nuit. En cas d'échec des émissions, périodiques ou aléatoires, le transmetteur comporte une mémoire, pour mémoriser le signal à transmettre, et un système séquentiel pour tenter à nouveau la mise en communication, jusqu'au succès.

Dans l'invention, on a interposé entre la centrale d'alarme et le centre de télésurveillance un lecteur 10 de carte à puce 11. Dans la pratique, le lecteur de carte à puce est même interposé entre la centrale d'alarme 1 et le transmetteur 4. Cependant, pour les installations futures, le lecteur 10 de carte à puce pourra être incorporé dans le transmetteur 4 lui même. Le fonctionnement de l'installation est alors autorisé par l'état d'une carte à puce 11 introduite dans le lecteur 10. La carte à puce est un mode préféré parce qu'il est plus sûr et parce que le microcircuit de la carte peut, par son intelligence, coopérer au fonctionnement du système. Cependant, pour l'essentiel, une carte (ou même un jeton) magnétique pourrait convenir. C'est pour ces raisons qu'on utilise ici le terme de carte électronique. Electronique signifie alors ici magnétique ou à microprocesseur. L'état de la carte va être décodé par le lecteur 10 et retentir en des niveaux logiques appliqués sur des entrées telles que 12 à 15 du transmetteur. Dans la solution préférée qui est montrée sur la figure 1, ces niveaux logiques sont imposés par des fermetures d'interrupteurs C₁ et C₂. L'état d'ouverture ou de fermeture de ces interrupteurs C₁ et C₂ est provoqué par un microprocesseur 18. Le microprocesseur 18 exécute un programme 19 contenu dans une mémoire programme 20 de type ROM dont le déroulement est fonction d'un état de paramétrisation du lecteur 10. Cet état de paramétrisation est mémorisé dans une mémoire 21. Le lecteur 10 comporte encore une horloge 22. L'horloge 22 peut être couplée à une batterie non représentée, et interne au lecteur 10 pour donner un temps absolu. Le microprocesseur 18 actionne les interrupteurs C₁ et C₂ en fonction de ces éléments. Le lecteur 10 comporte également un afficheur 23 pour montrer en clair son état de fonctionnement, ainsi qu'une fente d'insertion 24 pour permettre d'insérer la carte à puce 11. La fente 24 est une représentation symbolique de l'ensemble des moyens contenus dans le lecteur 10 et permettant à ce lecteur de connecter la carte 11 au microprocesseur 18. Dans ce but la carte 11 comporte, d'une manière connue, des métallisations telles que 25 ou 26 pour venir en contact de palpeurs électriques propres au lecteur 10. La fente 24 peut également être couplée à un détecteur de type fin de course 60 permettant de démarrer l'application. Cependant, dans une autre solution, un tel détecteur de type fin de course n'existe pas : le lecteur 10 possède une fonction de fonctionnement à vide au cours de laquelle, d'une part un témoin lumineux 27 est mis en clignotement, et où d'autre part le microprocesseur scrute périodiquement l'état des palpeurs électriques de la fente 24. Par contre un interrupteur externe peut cependant être utilisé pour mettre en et hors service le lecteur 10. Le principe de l'invention est le suivant : on introduit la carte 11 dans la fente 24. Le lecteur 10 prélève alors les unités prépayées contenues dans la carte 11 et les transfère dans une partie de sa mémoire 21. Puis il commence le décomptage. Tant que tout est en ordre, la ligne 8 peut envoyer les éventuelles alarmes au transmetteur 4 qui les répercute sur le centre de télésurveillance 6. La ligne 8 passe de préférence par un interrupteur C₅ qui est fermé lorsque tout est en ordre.

L'interrupteur C₁, fermé pendant le fonctionnement, joue le même rôle qu'une commande marche-arrêt 28 existant déjà dans les centrales d'alarmes de l'état de la technique. Cette commande 28 permettait par une liaison 29 d'imposer un état électrique correspondant à la mise en marche sur les entrées 12 et 13 du transmetteur 4. Avec l'invention, au lieu d'avoir une liaison directe de la commande 28 aux entrées 12 et 13, cette liaison passe par l'interrupteur C₁. On maintient de préférence l'existence de l'interrupteur 28.

Dans l'état de la technique également, l'envoi périodique des test effectués par le transmetteur sur la chaîne de transmission était faite à l'initiative de ce transmetteur. Dans ce but, le transmetteur comportait une horloge permettant de lancer l'opération de vérification, par exemple à minuit. Le transmetteur comportait également une option test matérialisée dont la sélection s'obtenait par un cavalier devant être enfiché entre deux entrées, par exemple 14 et 15. Lorsque le cavalier est présent (ou d'une manière duale lorsqu'il est absent), l'opérateur qui installe le transmetteur chez le client, lors de la première intervention, peut effectuer des tests pour vérifier que le transmetteur 4 et que la ligne 5 sont correctement connectés. Une fois que cette opération est terminée il enlève (ou d'une manière duale il remet) le cavalier en question.

Dans l'invention, on utilise la présence d'une telle option de test sur les transmetteurs pour commander avec un interrupteur C₂ l'ouverture et la fermeture de la connexion entre les bornes 14 et 15 à un rythme, de préférence journalier, imposé maintenant par le lecteur 10. Cette action rythmée journalière constitue la vérification d'une part de ce que le transmetteur est en bon état, et d'autre part de ce que le lecteur 10 est également en fonctionnement normal. Il est par ailleurs possible, plutôt que de fermer ou d'ouvrir l'interrupteur C2 une seule fois selon une périodicité journalière, de choisir au contraire de l'ouvrir un certain nombre de fois, les unes à la suite des autres, avec une durée caractéristique, par exemple 3 mn, pour indiquer qu'il s'agit d'un test périodique. On peut aussi envisager, lorsque l'interrupteur est fermé de faire envoyer par le microprocesseur 18 un message codé sur la ligne ainsi établie.

Lorsqu'il s'agit de l'application de surveillance des personnes âgées, des interrupteurs 281, C₄ et C₆ jouent les mêmes rôles respectivement que les interrupteurs 28, C₁ et C₂.

Un interrupteur C₃ permet même d'assurer l'alimentation électrique du transmetteur 4 depuis le lecteur 10. Lorsqu'il y a enlèvement de la carte 11, le microprocesseur 18 exécute un algorithme qui a cependant pour but de retarder l'ouverture de C₃. Dans ce cas, on assure une certaine sécurité, pendant environ 10 mn, en cas d'enlèvement intempestif. Cette durée est mise à profit pour signaler à la centrale de télésurveillance la cessation de la surveillance. Dans le cas décrit; les signaux de détresse ou de danger passent sur une ligne 8 commune. Il serait cependant possible de réaliser en plus une autre ligne, et un autre interrupteur pour les signaux.

Lorsque les conditions de validité du contrat de télésurveillance ne sont plus remplies, l'interrupteur C₂ (ou C₆) peut être ouvert (ou fermé) une seule et dernière fois manifestant ainsi la cessation du contrat. Bien entendu, les alarmes transmises par la ligne 8 ne sont transmises plus loin par la ligne 5 que si le fonctionnement du transmetteur 4 est correctement validé par les interrupteurs C₁ et C₂ (ou C₄ et C₆). Sur le plan pratique, l'alimentation électrique du lecteur 10 pourra être obtenue à partir de la centrale d'alarme 1. Une ligne électrique 30 permet d'acheminer, sous 12V continu un courant de 100 mA en régime continu, et 250 mA pendant les périodes transitoires (fonctionnement de l'affichage, envoi de vérifications périodiques). L'installation comporte par ailleurs, toutes les protections complémentaires assurées par les soins du client. En particulier tous ces dispositifs doivent être peu visibles.

Les cartes à puces utilisées sont, dans l'exemple préféré de réalisation, des cartes à puce de type GPM 896 de la société GEMPLUS CARD INTERNATIONAL France. Dans le procédé de l'invention, on conformera des cartes de ce type selon deux usages, un usage utilisateur dit USER et un usage de service dit MASTER. Dans les deux cas les cartes possèdent des zones mémoires telles que 31 ou 32 ainsi que des moyens non représentés de lecture et d'écriture dans ces cartes.

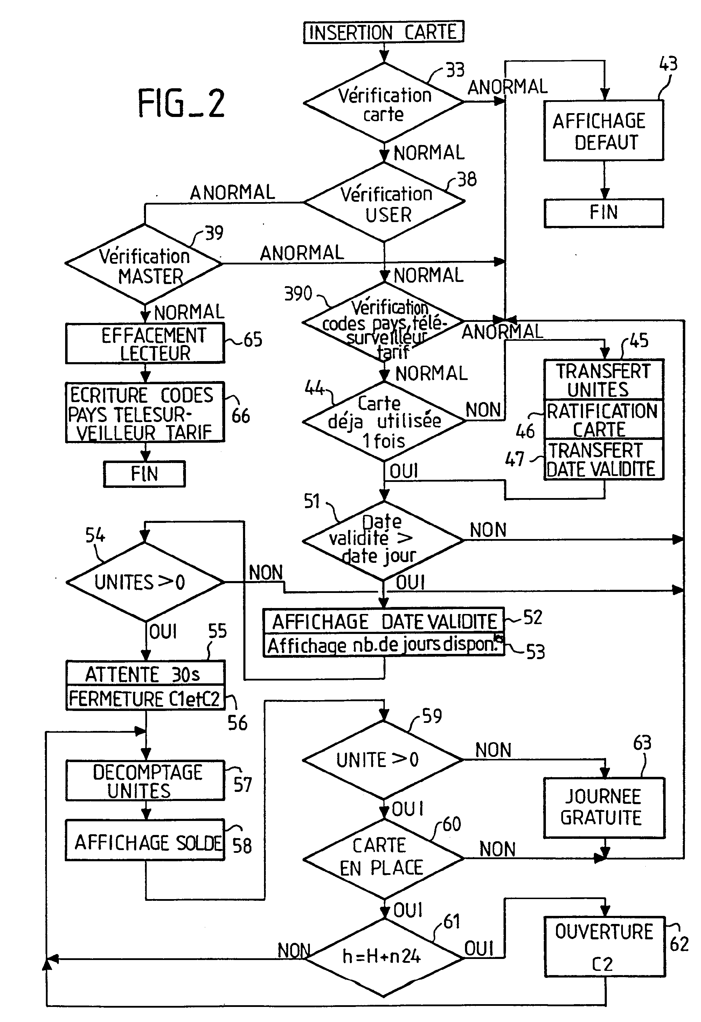

On va décrire maintenant, le fonctionnement du procédé de l'invention à l'aide de l'organigramme représenté sur la figure 2. Avant l'introduction d'une carte, dans un exemple, les interrupteurs C1 et C2 sont ouverts. Le bouton de commande 28 de la centrale d'alarme 1 est sur la position marche. L'état électrique imposé par la centrale n'est cependant pas transmis au transmetteur 4 du fait de l'ouverture de l'interrupteur C₁. Le lecteur est dans l'état de fonctionnement à vide et la lampe 27 clignote seule.

On introduit alors la carte utilisateur dite USER. Le programme 19 comporte toutes les opérations représentées sur la figure 2. Il comporte une première vérification 33 de ce que la carte à puce est effectivement une carte à puce compatible avec le lecteur ou non. Dans ce but, le lecteur va lire, à une adresse particulière, une identification carte 34 enregistrée dans la carte. Si la vérification de cette identification est anormale, le lecteur manifeste l'erreur en exécutant une instruction 43 de défaut, par exemple l'indicateur 23 montre trois tirets horizontaux dans chacun des trois digits 35 à 37 qu'il comporte, ou bien des codes erreurs relatifs au lecteur ou à la carte. Si par contre la vérification est normale, le lecteur cherche à savoir ensuite à quelle type de carte il a affaire, une carte utilisateur ou une carte de service. Dans le cas où il a affaire à une carte utilisateur, un test 38 donne comme résultat de test un résultat : NORMAL. Le déroulement du programme 19 conduit alors à exercer une vérification 390 des codes pays, télésurveilleur et tarif contenus dans la carte. Ces codes enregistrés dans des zones d'adresse 40 à 42 de la carte doivent être conformes à des codes identiques enregistrés et à des adresses correspondantes dans la mémoire 21 du lecteur 10. Si cette vérification est anormale on retourne comme précédemment à l'instruction 43 d'affichage de défaut.

Si par contre la vérification 390 montre la compatibilité de la carte avec le lecteur, l'utilisation normale de la carte pourra être entreprise. Dans ce cas, il y a lieu de distinguer, au cours d'un test 44 suivant du programme 19, si l'insertion de la carte utilisateur est une première insertion ou non. Si c'est une première insertion, on exécute les instructions 45 à 47. L'instruction 45 a pour objet de transférer au lecteur une information, dans un exemple préféré sur un seul octet, représentant le nombre de jours de télésurveillance auquel le client à souscrit auprès de la société de télésurveillance. Ce nombre de jours est stocké dans une zone mémoire 48 de la carte 11. Cette indication de durée est décodée et est transformée en une série d'unités décomptables et stockées dans une région particulière de la mémoire 21. Dans une opération ultérieure 46, on va alors écrire dans une zone 49 de la carte une indication, un bit 1 ou un bit 0, par lequel on signale que le prélèvement des unités de la carte a été fait. En définitive l'opération de test 44 revient à aller lire dans la zone 49 l'état du bit de transfert. Selon la convention choisie, ce bit indiquera qu'une première utilisation a déjà été faite, ou au contraire qu'elle n'a pas encore eu lieu. De préférence la région 49 est une région de type programmable mais jamais plus effaçable (ou vice versa en cas de réalisation duale). Sur le plan électronique la zone mémoire 49 est par exemple une zone mémoire de type EPROM.

Par ailleurs, dans une zone 50, la carte utilisateur comporte une date de fin de contrat. En effet le contrat étant souscrit, par exemple pour trois ans, au moment de sa souscription le tarif et les sommes payées par le client sont liés à une date de fin de contrat. La date de validité de la carte est donc elle aussi transférée dans la mémoire 21.

Par un test ultérieur 51, on vérifie que la date de validité du contrat est postérieure à la date du jour (délivrée par l'horloge absolue 22). Si ce n'est pas le cas, on pourra soit retourner à l'état de défaut de fonctionnement du système soit provoquer, en fonction de la politique commerciale du prestataire de service, une acceptation sans condition, avec ou non signalement de cet état de fait du client. Ce signalement peut prendre la forme d'un affichage intermittant des indications qui sont montrées par la suite.

Dans le cas où la date de validité est postérieure à la date du jour, ou dans les cas d'acceptation commerciales cités ci-dessus, on affiche d'abord, temporairement la date de validité, par exemple on affiche "5" "9" "1" pour dire que la date de validité du contrat est Mai 1991. Puis on affiche, et cet affichage reste en permanence sur l'afficheur 23, le nombre de jours disponibles compte tenu du nombre de jours prépayés dans la carte 11 et du nombre de jours éventuellement consommés. Par exemple, on pourra afficher "118" s'il reste 118 jours sur la carte. Ces deux instructions d'affichages sont les instructions 52, 53 du programme 19.

Après l'exécution de l'instruction 53, on exécute un test 54 pour savoir si le nombre de jours disponibles est supérieur à zéro : pour savoir si le nombre d'unités encore stockées dans la mémoire 21 est plus grand que zéro. Si cela n'est pas le cas, le programme se déroute vers l'instruction 43. Par contre, si ceci est le cas, on ne va démarrer le fonctionnement de la surveillance qu'après une certaine durée, par exemple, qu'après un temps d'attente de trente secondes. Ce temps d'attente permet de consulter le nombre de jours disponibles sans mettre en fonction le mécanisme de télésurveillance. En effet, si on introduit la carte, les instructions 33 à 54 se déroulent et permettent par les affichages 52 et 53 au client de savoir où il en est de son contrat. Si avant la fin de cette durée d'attente la carte 11 n'est pas retirée du lecteur 10, le processus de surveillance démarre.

Ce processus de surveillance comporte essentiellement une instruction 57 de décomptage des unités en même temps qu'un affichage 58 permanent du solde disponible. Périodiquement, par exemple toutes les heures si le décomptage des unités se fait par heure (c'est une option préférée de l'invention), on teste par un test 59 si le nombre d'unités restant est supérieur ou égal à zéro. S'il est supérieur à zéro, on teste par un test 60 la présence effective de la carte. Le test 60 peut par exemple être assimilé au test 33 de vérification de la carte : on va lire le code du type de la carte. Si on réussi à lire ce code, on en déduit que la carte est en place et par un test 61 on va chercher à savoir si au moins une journée (au moins 24 heures) s'est déroulée depuis l'insertion de la carte. Dans ce but, on compare l'heure courante h à l'heure d'insertion de la carte H augmentée de 24. Ceci peut tout simplement être utilisé par un compteur par 24 qui revient automatiquement à zéro au bout de 24 impulsions (de 24 heures). Il suffit dont de tester un état particulier de ce compteur (par exemple que des zéros) pour savoir si 24 heures se sont passées ou non. Tant que 24 heures ne se sont pas passées au sortir du test 51 on retourne à l'instruction 57 avec laquelle on décomptera une autre unité l'heure suivante. Le décomptage d'une unité supplémentaire l'heure suivante est permis du fait de la présence de l'horloge 22. Par contre, si 24 heures se sont passées depuis l'introduction de la carte, on provoque l'ouverture (ou la fermeture) temporaire de l'interrupteur C2. Cette ouverture temporaire provoque la rupture de la liaison électrique entre les bornes 14 et 15. Dans ces conditions le transmetteur envoi automatiquement un message correspondant au centre de surveillance 6. Le message correspondant est un message par lequel le centre de télésurveillance va reconnaître que la transmission à partir du lecteur est en ordre. Après cette ouverture temporaire de C2 le programme se reboucle sur l'instruction 57.

Lorsque le nombre d'unités devient égal à zéro, le test 59 déroute la suite des instructions du programme sur une instruction 63 au cours de laquelle on attribue au souscripteur une journée gratuite. Ceci signifie aussi que l'on peut d'une part provoquer un affichage particulier sur l'afficheur 23 : par exemple un affichage clignotant au lieu d'un affichage fixe, et ceci signifie également qu'au delà de la durée de 24 heures à compter du basculement du test 59 on aboutira sur l'instruction 43 d'arrêt de la surveillance. On peut aussi au cours de cette "journée gratuite" faire ouvrir à plusieurs reprise, par exemple toutes les six heures, l'interrupteur C2 pour signaler au centre de télésurveillance la fin imminente du contrat en question.

Si au cours du test 60 on détecte que la carte a été enlevée, le programme se déroute directement sur l'instruction 43.

Il est évident que toutes les indications portées dans les zones mémoires de la carte peuvent être chiffrées et interprétées par le lecteur 10 si le programme 19 comporte les options de déchiffrement. Ceci peut permettre par exemple d'éviter les fraudes sur les cartes à puce.

Quand il s'agit de la surveillance des personnes âgées, une autre carte peut être introduit dans le lecteur. Cette autre carte possède un autre code tarif dont la lecture déroute le programme 19 vers l'application de surveillance adaptée. Et donc, par cet exemple les interrupteurs C₄ et C₆ seront fermés par le microprocesseur 18 au lieu des interrupteurs C₁ et C₂. Cette alternance peut également être assurée par action sur les interrupteurs 28 et ou 281. Plutôt que d'introduire une autre carte, on peut préférer créer un nouveau tarif incluant les services de surveillance vol et de personnes âgées et ainsi utiliser pour les deux besoins une même carte. Dans une autre variante, la même carte peut comporter, dans des zones mémoires différentes, les deux applications.

Lors de la première mise en service d'une telle installation chez un client le travail à exécuter comporte deux phases. Dans une première phase on installe le lecteur 10. On le connecte d'une part à la ligne bifilaire 29 en cascade dans la liaison entre les bornes 12, 13 et le bouton de marche-arrêt 28 de la centrale d'alarme 1, d'autre part on réalise la connexion par une ligne 64 de l'interrupteur C2 aux bornes 14, 15 du transmetteur 4. L'alimentation électrique est apportée par la ligne bifilaire 30 depuis la centrale d'alarme. Dans une deuxième phase, l'opérateur introduit la carte de service "MASTER" dans la fente 24 du lecteur 10. Le programme 19 reconnaît alors à la suite du test 38 et du test 39 qu'il est en présence d'une carte de service.

Dans ce cas, par une première instruction 65, le programme 19 commence par effacer la mémoire 21 du lecteur. Puis le programme provoque par une instruction 66 l'écriture à des endroits adéquats de la mémoire 21, des codes pays, nom du télésurveilleur et tarif du contrat souscrit contenus dans la carte 32. Lorsque ces opérations sont terminées, le lecteur 10 se remet en marche à vide, en faisant clignoter la lampe 27.

Le système de l'invention a ceci de particulier qu'il est possible pour un utilisateur de changer de code de tarification sans qu'il soit nécessaire de déplacer un opérateur jusque chez cet utilisateur. En effet, il suffit de lui envoyer une carte à puce MASTER par la poste (et lui demander de la renvoyer à l'issue). Cette carte comporte les indications relatives au nouveau contrat. Par exemple, il sera soumis maintenant à un tarif correspondant à une intervention immédiate d'un opérateur du prestataire chez le client en cas d'alarme au lieu d'un simple signalement à la police.

La taille mémoire nécessaire pour les mémoires 31 ou 32 des cartes à puce 11 n'est pas nécessairement grande. A titre d'exemple, on indique que l'identification peut être portée par deux octets, que le code utilisateur ou de service peut être représenté par un octet, que le numéro de série peut être représenté par sept octets, le nombre de jours de surveillance sera représenté par un octet, le code pays par un octet, le code télésurveilleur par deux octets, les codes tarifs par un octet, la date de fin de validité du contrat sera représenté par deux octets et le code client sera représenté par vingt octets. En ce qui concerne la carte de service, elle comporte éventuellement même moins de mémoire puisque certaine des indications de la carte utilisateur ne sont pas portées sur elle.

Compte tenu de l'existence de cartes à microprocesseur, il est évident que toutes les opérations effectuées dans le lecteur 10 peuvent être effectuées à l'intérieur de la carte 11 elle même si cette carte comporte le microprocesseur 18 et une mémoire programme 20. Dans ce cas également il est possible de confondre le lecteur 10 avec le transmetteur 4. Dans ce cas, la fonction de lecture du lecteur 10 serait une une fonction supplémentaire des fonctions du transmetteur 4. Mais ce transmetteur serait alors d'un genre nouveau. Si même la carte à puce 11 contient toute l'intelligence du procédé et celle du transmetteur, la seule chose que doit alors lui fournir le lecteur 10 (ou le transmetteur 4) est l'horloge 22 qui peut être absolue. Le bouton lumineux 27 et l'afficheur 23 peuvent être partagés avec les mêmes éléments déjà en place dans le transmetteur 4.

## Revendications

1. Procédé de télésurveillance comportant les étapes suivantes :
- on relie au moins une centrale d'alarme (1), d'une part à un ou des détecteurs (2) d'intrusion ou de danger surveillant des endroits (3) sensibles d'un domaine appartenant à un utilisateur du procédé, et d'autre part à un transmetteur (4),
- ledit transmetteur est mis en relation par une ligne de télécommunication (5) avec un centre (6) de télésurveillance,
- ce transmetteur émet sur la ligne de télécommunication, d'une part périodiquement des signaux de contrôle lorsqu'il est en ordre de marche, et d'autre part des signaux d'alarme lorsque les détecteurs détectent un phénomène,
caractérisé en ce qu'il comporte les étapes suivantes:
- on interpose entre la centrale d'alarme et le centre de télésurveillance un lecteur (10) de carte électronique, et
- on introduit dans ce lecteur une carte électronique utilisateur (11) servant de moyen de prépaiement dans laquelle sont mémorisées des informations représentant au moins une quantité prépayée,
- on décompte des unités au rythme d'une horloge (22) du lecteur, et
- on autorise (C1,C2) le fonctionnement du transmetteur en fonction du nombre d'unités décomptées et des informations mémorisées dans la carte.

2. Procédé selon la revendication 1, caractérisé en ce que
- on intègre le lecteur de carte électronique au transmetteur.

3. Procédé selon l'une quelconque des revendications 1 à 2, caractérisé en ce que
- on autorise le fonctionnement du transmetteur si les informations mémorisées dans la carte électronique satisfont à au moins un des critères suivants:
- un code (34) type de carte enregistré dans la carte est reconnu par le lecteur,
- un code (50) de validité temporelle de la carte enregistré dans la carte est reconnu par le lecteur,
- un code (40) pays enregistré dans la carte est reconnu par le lecteur,
- un code (41) prestataire enregistré dans la carte est reconnu par le lecteur,
- un code (42) tarif enregistré dans la carte est reconnu par le lecteur.

4. Procédé selon l'une quelconque des revendications 1 à 3, caractérisé en ce que
- on munit préalablement la carte électronique d'une information représentative d'une durée (48) de souscription à un service de télésurveillance,
- on décode (45), au moment d'une insertion de cette carte dans le lecteur, cette information représentative d'une durée, et on la transforme en unités enregistrées dans une mémoire du lecteur.

5. Procédé selon la revendication 4, caractérisé en ce que
- on décompte (57) les unités enregistrées dans la mémoire du lecteur, et
- on autorise (59) le fonctionnement du transmetteur tant qu'il reste des unités à décompter.

6. Procédé selon la revendication 4, caractérisé en ce que
- on inscrit (46) dans une mémoire de la carte électronique, au moment de la première insertion de cette carte dans le lecteur, une information (49) relative au décodage de l'information représentative d'une durée de souscription, et en ce qu'en conséquence
- on interdit (44) la réitération de ce décodage après un premier et unique décodage.

7. Procédé selon l'une quelconque des revendications 1 à 6, caractérisé en ce que
- on fait envoyer par le transmetteur un signal de contrôle relatif à un fonctionnement anormal du lecteur, et en ce que
- on affiche (43) sur le lecteur une indication lumineuse relative à ce fonctionnement anormal.

8. Procédé selon l'une quelconque des revendications 1 à 7, caractérisé en ce que
- on fait envoyer périodiquement par le transmetteur et à l'initiative (62) du lecteur un signal de contrôle indiquant un fonctionnement normal de ce lecteur.

9. Procédé selon la revendication 5, caractérisé en ce que
- on arrête (60) de décompter dès que la carte électronique est retirée du lecteur.

10. Procédé selon l'une quelconque des revendications 1 à 9, caractérisé en ce que,
- au moment de l'installation du lecteur chez le client, on provoque, à l'aide d'une carte électronique de service (32) insérée dans le lecteur, l'enregistrement d'indications dans des mémoires (21) choisies d'avance de ce lecteur,
- ces indications étant relatives à une au moins des caractéristiques suivantes:
- code prestataire,
- code tarif,
- code pays.

11. Procédé selon l'une quelconque des revendications 1 à 10, caractérisé en ce que
- on effectue un ensemble de vérifications concernant la carte électronique utilisateur au moment de son introduction dans le lecteur et en ce que,
- on retarde (55) la mise en service de l'installation par rapport à l'instant de cette introduction pour permettre, pendant ce temps de retard d'afficher des indications relatives à la télésurveillance.

12. Procédé selon l'une quelconque des revendications 1 à 11, caractérisé en ce que
- on connecte (C2,64) le lecteur à une boucle de test (14,15) du transmetteur.

13. Procédé de télégestion comportant les étapes suivantes :
- on relie au moins un terminal (1) appartenant à un utilisateur du procédé à un transmetteur (4),
- ledit transmetteur est mis en relation par une ligne de télécommunication (5) avec un centre (6) de télégestion,
- ce transmetteur émet sur la ligne de télécommunication, d'une part périodiquement des,signaux de contrôle lorsqu'il est en ordre de marche, et d'autre part des signaux correspondant au service géré, caractérisé en ce qu'il comporte les étapes suivantes:
- on interpose entre le terminal et le centre de télégestion un lecteur (10) de carte électronique, et
- on introduit dans le lecteur une carte électronique utilisateur (11) servant de moyen de prépaiement dans laquelle sont mémorisées des informations représentant au moins une quantité prépayée,
- on décompte des unités au rythme d'une horloge (22) du lecteur, et
- on autorise (C1,C2) le fonctionnement du transmetteur en fonction du nombre d'unités décomptées et des informations mémorisées dans la carte.

## Patentansprüche

1. Verfahren zur Fernüberwachung mit den folgenden Schritten:
- man verbindet wenigstens eine Alarmzentrale (1) einerseits mit einem oder mehreren Eindring- oder Gefahrdetektoren (2), die empfindliche Stellen (3) eines einem Benutzer des Verfahrens zugehörigen Bereichs überwachen, und andererseits mit einem Sender (4),
- der Sender wird über eine Fernmeldeleitung (5) mit einem Fernüberwachungszentrum (6) in Verbindung gesetzt,
- der Sender sendet über die Fernmeldeleitung einerseits periodisch Kontrollsignale, wenn er betriebsbereit ist, und andererseits Alarmsignale, wenn die Detektoren eine Erscheinung feststellen,
dadurch gekennzeichnet, daß es die folgenden Schritte aufweist:
- man fügt zwischen die Alarmzentrale und das Fernüberwachungszentrum einen Leser (10) für elektronische karten ein und
- man führt in den Leser eine elektronische Benutzerkarte (11) ein, die als Vorauszahlungsmittel dient, in dem Informationen gespeichert sind, die wenigstens einen vorausbezahlten Betrag darstellen,
- man zählt Einheiten im Rhythmus eines Taktgebers (22) des Lesers zurück und
- man erlaubt (C1, C2) den Betrieb des Senders in Abhängigkeit von dar Anzahl der zurückgezählten Einheiten und von den in der Karte gespeicherten Informationen.

2. Verfahren nach Anspruch 1, dadurch gekennzeichnet, daß
- man den Leser für elektronische Karten in den Sender integriert.

3. Verfahren nach einem der Ansprüche 1 bis 2, dadurch gekennzeichnet, daß
- man den Betrieb des Senders erlaubt, wenn die in der elektronischen Karte gespeicherten Informationen wenigstens eines der folgenden Kriterien erfüllen:
- es wird ein in der Karte gespeicherter Kartentypcode (34) von dem Leser erkannt,
- es wird ein in der Karte gespeicherter Code (50) für die zeitliche Gültigkeit der Karte von dem Leser erkannt,
- es wird ein in der Karte gespeicherter Ländercode (40) von dem Leser erkannt,
- es wird ein in der Karte gespeicherter Dienstleistungscode (41) von dem Leser erkannt,
- es wird ein in der Karte gespeicherter Tarifcode (42) von dem Leser erkannt.

4. Verfahren nach einem der Ansprüche 1 bis 3, dadurch gekennzeichnet, daß
- man die elektronische Karte zuvor mit einer Information versieht, die eine Abonnementdauer (48) für einen Fernüberwachungsdienst darstellt,
- man im Zeitpunkt einer Einführung dieser Karte in den Leser diese eine Dauer darstellende Information decodiert (45) und sie in Einheiten umsetzt, die in einem Speicher des Lesers aufgezeichnet werden.

5. Verfahren nach Anspruch 4, dadurch gekennzeichnet, daß
- man die in dem Speicher des Lesers aufgezeichneten Einheiten zurück zählt (57) und
- man den Betrieb des Senders zuläßt (59), solange zurück-zuzählende Einheiten übrig sind.

6. Verfahren nach Anspruch 4, dadurch gekennzeichnet, daß
- man in einen Speicher der elektronischen Karte im Zeitpunkt der ersten Einführung der Karte in den Leser eine Information (49) einschreibt (46), die sich auf die Decodierung der Information bezieht, die eine Abonnementdauer darstellt, und daß man als Folge davon
- die Wiederholung dieser Decodierung nach einer ersten und einzigen Decodierung verbietet (44).

7. Verfahren nach einem der Ansprüche 1 bis 6, dadurch gekennzeichnet, daß
- man durch den Sender ein Kontrollsignal abschicken läßt, das sich auf einen anormalen Betrieb des Lesers bezieht, und daß
- man am Leser ein Leuchtsignal anzeigt (43), das sich auf diesen anormalen Betrieb bezieht.

8. Verfahren nach einem der Ansprüche 1 bis 7, dadurch gekennzeichnet, daß
- man periodisch durch den Sender auf Veranlassung (62) des Lesers ein Kontrollsignal abschicken läßt, das einen normalen Betrieb des Lesers anzeigt.

9. Verfahren nach Anspruch 5, dadurch gekennzeichnet, daß
- man die Zurückzählung anhält (60), sobald die elektronische Karte aus dem Leser herausgezogen wird.

10. Verfahren nach einem der Ansprüche 1 bis 9, dadurch gekennzeichnet, daß
- man im Zeitpunkt der Installation des Lesers beim Kunden mit Hilfe einer in den Leser eingeführten elektronischen Servicekarte (32) die Aufzeichnung von Angaben in im voraus gewählten Speichern (21) des Lesers veranlaßt,
- wobei sich diese Angaben auf wenigstens eines der folgenden Merkmale beziehen:
- Dienstleistungscode,
- Tarifcode,
- Ländercode.

11. Verfahren nach einem der Ansprüche 1 bis 10, dadurch gekennzeichnet, daß
- man eine Anzahl von die elektronische Benutzerkarte betreffenden Prüfungen im Zeitpunkt ihrer Einführung in den Leser durchführt und daß
- man die Inbetriebnahme der Anlage gegenüber dem Zeitpunkt dieser Einführung verzögert (55), um während dieser Verzögerungszeit die Anzeige der sich auf die Fernüberwachung beziehenden Angaben zu ermöglichen.

12. Verfahren nach einem der Ansprüche 1 bis 11, dadurch gekennzeichnet, daß
- man den Leser mit einer Testschleife (14, 15) des Senders verbindet (C2, 64).

13. Verfahren zur Fernverwaltung mit den folgenden Schritten:
- man verbindet wenigstens eine einem Benutzer des Verfahrens gehörende Endstelle (1) mit einem Sender (4),
- der Sender wird über eine Fernmeldeleitung (5) mit einem Fernverwaltungszentrum (6) in Verbindung gesetzt,
- der Sender sendet über die Fernmeldeleitung einerseits periodisch Kontrollsignale, wenn er betriebsbereit ist, und andererseits Signale, die dem geleisteten Dienst entsprechen, dadurch gekennzeichnet, daß es die folgenden Schritte enthält:
- man fügt zwischen die Endstelle und das Fernverwaltungszentrum einen Leser (10) für elektronische Karten ein und
- man führt in den Leser eine elektronische Benutzerkarte (11) ein, die als Vorauszahlungsmittel dient, in dem Informationen gespeichert sind, die wenigstens einen vorausbezahlten Betrag darstellen,
- man zählt Einheiten im Rhythmus eines Taktgebers (22) des Lesers zurück und
- man erlaubt (C1, C2) den Betrieb des Senders in Abhängigkeit von der Anzahl der zurückgezählten Einheiten und den in der Karte gespeicherten Informationen.

## Claims

1. Monitoring system comprising the following stages:
- at least one alarm centre (1) is connected on the one hand to an intrusion or danger detector or detectors (2) monitoring the sensitive places (3) of a domain belonging to a user of the process and on the other hand to a transmitter (4),
- the said transmitter is put in communication with a tele-monitoring centre (6) by a telecommunication line (5),
- this transmitter emits on the telecommunication line periodical control signals on the one hand when it is in operating order and alarm signal on the other when the detectors detect a phenomenon,
characterised by the fact that it comprises the following stages:
- an electronic card reader (10) is interposed between the alarm centre and the tele-monitoring centre, and
- an electronic user card (11), serving as a prepayment means, in which information representing at least one prepaid quantity, is introduced into the said reader,
- units are counted off at the rhythm of a clock (22) of the reader, and
- the operation of the transmitter is authorized (C1, C2) as a function of the number of units counted off and information memorized in the card.

2. Process in accordance with Claim 1, characrterised by the fact that
- the electronic card reader is integrated with the transmitter.

3. Process in accordance with either of Claims 1 to 2, characterised by the fact that:
- the operation of the transmitter is authorized if the items of information memorized in the electronic card,satisfy at least one of the following criteria:
- a typical card code (34) recorded in the card is recognised by the reader,
- a temporary validity code (50) of the card, recorded in the card, is recognised by the reader,
- a country code (40) recorded in the card is recognised by the reader,
- a service code (41) recorded in the card is recognised by the reader,
- a tariff code (42) recorded in the card is recognised by the reader.

4. Process in accordance with any one of Claims 1 to 3, characterised by the fact that
- the electronic card is equipped in advance with an item of information representative of a duration (48) of subscription to a tele-monitoring service,
- at the moment when this card is inserted in the reader this information representative of a duration is decoded (45) and transformed into units recorded in a memory of the reader.

5. Process in accordance with Claim 4, characterised by the fact that
- the units recorded in the memory of the reader are counted off (57), and
- the operation of the transmitter is authorized (59) as long as any units remain to be counted off.

6. Process in accordance with Claim 4, characterised by the fact that
- at the moment of the insertion of the card in the reader an item of information (49) relating to the decoding of the information representing a subscription period is written (46) into a memory of the electronic card, and that consequently
- the repetition of this decoding after a first and only decoding if prevented (44).

7. Process in accordance with any one of Claims 1 to 6 characterised by the fact that
- the transmitter is caused to convey a control signal relating to an abnormal operation of the reader, and that
- a luminous signal relating to this abnormal operation is displayed (43) on the reader.

8. Process in accordance with any of Claims 1 to 7, characterised by the fact that
- a control signal indicating normal operation of the reader is caused to be conveyed periodically by the transmitter and on the initiative (62) of the reader.

9. Process in accordance with Claim 5, characterised by the fact that
- the counting is stopped (60) as soon as the electronic card is withdrawn from the reader.

10. Process in accordance with any one of Claims 1 to 9, characterised by the fact that
- at the moment when the reader is installed on the client's premises the recording of indications in memories (21) selected in advance by the reader is effected by the aid of an electronic service card (32) inserted in the reader,
- these indications relating to at least one of the following characteristics:
- service code,
- tariff code,
- country code.

11. Process in accordance with any one of Claims 1 to 10, characterised by the fact that
- a set of verifications concerning the electronic user card is effected at the moment when it is introduced into the reader, and that
- the starting of the installation is retarded (55) in relation to the moment of the said insertion, in order to enable indications relating to the tele-monitoring to be displayed during this retardation period.

12. Process in accordance with any one of Claims 1 to 11, characterised by the fact that
- the reader is connected (C2, 64) to a test loop (14, 15) of the transmitter.

13. Tele-management process comprising the following stages:
- at least one terminal (1) belonging to a user of the process is connected to a transmitter (4),
- the said transmitter is put in communication with a tele-management centre (6) by means of a telecommunication line (5),
- this transmitter emits on the telecommunication line periodical control signals, on the one hand, when it is in operating order and signals corresponding to the service managed, on the other hand, characterised by the fact that it comprises the following stages:
- an electronic card reader (10) is interposed between the terminal and the tele-management centre, and
- an electronic user card (11) is introduced into this reader, the card serving as a means of prepaying in which are memorized items of information representing at least one prepaid quantity,
- units are counted off at the rhythm of a clock (22) of the reader, and
- the operation of the transmitter is authorized (C1, C2) as a function of the number of units counted off and items of information memorized in the card.
